(19) **Europäisches Patentamt / European Patent Office / Office européen des brevets**

(11) **EP 4 675 469 B1**

(12) # EUROPEAN PATENT SPECIFICATION

(45) Date of publication and mention
of the grant of the patent:
**15.07.2026 Bulletin 2026/29**

(21) Application number: **25185305.7**

(22) Date of filing: **25.06.2025**

(51) International Patent Classification (IPC):
**G06F 21/32** (2013.01)    **H04L 9/00** (2022.01)
**G06F 21/62** (2013.01)    **H04L 9/32** (2006.01)
**H04L 9/40** (2022.01)      **G06N 10/40** (2022.01)

(52) Cooperative Patent Classification (CPC):
**G06F 21/32; G06F 21/62; G06N 20/00;**
**H04L 9/3231; H04L 9/3239; H04L 63/0861;**
**G06N 10/40**

(54) **QUANTUM BIOMETRIC CODES FOR SECURE IDENTIFICATION**

QUANTENBIOMETRISCHE CODES ZUR SICHEREN IDENTIFIZIERUNG

CODES BIOMÉTRIQUES QUANTIQUES POUR UNE IDENTIFICATION SÉCURISÉE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **04.07.2024 DE 102024119097**

(43) Date of publication of application:
**07.01.2026 Bulletin 2026/02**

(73) Proprietor: **Bundesdruckerei GmbH**
**10969 Berlin (DE)**

(72) Inventors:
• **Radons, Dr. Manuel**
  **15712 Königs Wusterhausen (DE)**
• **Simon, Dr. Lars**
  **10117 Berlin (DE)**

(74) Representative: **Richardt Patentanwälte PartG**
**mbB**
**Wilhelmstraße 7**
**65185 Wiesbaden (DE)**

(56) References cited:
**US-A1- 2008 209 227    US-A1- 2023 318 838**
**US-B2- 11 907 347**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF THE INVENTION

The invention relates to the field of encryption and data security, in particular to the identification and verification of individuals authorized to access a restricted location, database and/or computer system.

## BACKGROUND

Computer systems or databases, as well as locations such as areas of buildings in e.g. government or military facilities may be access-restricted, granting access only to authorized individuals. The need for a secure identification of said authorized individuals arises for example out of the necessity to restrict information to sensitive information stored in said access-restricted locations, databases and/or computer systems.

The article "Comparative Benchmark of a Quantum Algorithm for the Bin Packing Problem" by Garcia de Andoin et al., published on the arXiv on the 15.07.2022 describes the bin packing problem as a combinatorial optimization problem.

The article "QAL-BP: an augmented Lagrangian quantum approach for bin packing" by Cellini et al., published in Scientific Reports on the 01.03.2024 describes an implementation of a bin packing algorithm for quantum computers.

The article "Hybrid Approach for Solving Real-World Bin Packing Problem Instances Using Quantum Annealers" by Romero et al., published on the arXiv on the 25.05.2023 describes an implementation of a bin packing algorithm for quantum annealers.

The article "Quantum Data-Fitting" by Wiebe et al., published on the arXiv on the 03.07.2012 describes a quantum algorithm that efficiently determines the quality of a least-squares fit over an exponentially large data set.

The document US 2023/0318838 A1 describes methods, systems, and media for secure authentication of users using one or more biometric recognition systems. In some embodiments, the method comprises: receiving an indication that a biometric identifier is to be used to authenticate a user to a service; receiving (i) the biometric identifier of the user from a capture device and (ii) knowledge-based secondary information associated with the user from an input device; determining a Voronoi cell identifier that corresponds to the biometric identifier; calculating a hash of the Voronoi cell identifier and the knowledge-based secondary information; transmitting the hash to a server device for verification; in response to transmitting the hash to the server device, receiving a response indicating whether the hash matches a previously stored hash that was stored in the server device; and determining whether to automatically authenticate the user to the service based on the response from the server device.

The document US 2008/0209227 A1 describes techniques for authenticating biometric parameters via biometric hashing are described. In one implementation, a biometric parameter of a user (e.g., fingerprint image, blood-vessel pattern, retina scan, etc.) is captured. One or more biometric hashes are produced from the biometric parameter. To generate hashes that appear random, pseudorandom metrics are applied over the biometric parameter. The hashes are stored in association with user information that can be employed to authenticate the user. Subsequently, during authentication, a new biometric parameter is captured and hashes are computed from the parameter. The new biometric hashes are then compared with the predetermined stored hashes. If any of the new hashes are found to be identical, or sufficiently similar, to one or more of the predetermined biometric hashes, the biometric parameter is deemed valid and the user is authenticated.

## SUMMARY OF THE INVENTION

It is an objective to provide for a method, system and computer program product for providing secure anonymized access to a restricted location, database and/or computer system to an individual, if said individual possesses the required access rights for said restricted location, database and/or computer system.

The objectives underlying the invention are solved by the features of the independent claims. Embodiments are provided in the dependent claims.

In one aspect of the invention a method for granting or denying secure anonymized access to a restricted location, database and/or computer system to an individual is disclosed.

The method comprises a granting or denying of secure anonymized access to a restricted location, database and/or computer system to an individual on the basis of biometric data, the method comprising: constructing a one-way function for encoding biometric data, adding of entries to a database, the entries comprising hashes of encoded biometric data and PINs, processing an access request from the individual, and based on the result of the processing of the access request, granting or denying secure anonymized access to the restricted location, database and/or computer system to the individual.

Embodiments of biometric data of an individual comprise at least one image of the face of the individual, at least one image of a fingerprint of the individual, at least one image of the iris of the individual, and/or an audio recording of the voice of the individual.

The use of biometric data may advantageously increase security compared to other methods of identification, e.g. the use of a password or PIN (personal identification number). Advantageously, biometric data may be more difficult to fake for a malicious individual seeking unauthorized access. In a preferred embodiment, to even further increase security, the biometric data is used in combination with a password or PIN for the identification of individuals.

The term biometric data as used herein in comprises biometric data used as training data, for example for the construction of the one-way function, biometric data added to the database and/or biometric data provided by an individual, for example when receiving an access request from said individual.

The use of the encoding as described in the present subject matter is further advantageous, as it circumvents the need for the biometric data to be stored directly in a database or other storage medium, where it may be accessed by a malicious entity. In particular, it is not strictly required for the biometric to be transmitted or stored by a cloud service provider, further increasing data security and enabling privacy protection and regulatory compliance.

The constructing of a one-way function, in particular the continuous one-way function, advantageously increases security, as the one-way function is characterized by the features of being computationally easy to evaluate but computationally difficult, to reverse or invert, wherein "easy" and "difficult" are intended to be read relative to each other in terms of complexity theory. This difficulty of reversing the one-way function prevents reverse-engineering of the biometric data, wherein said reverse-engineering describes attempts made by malicious individuals or entities to obtain a pre-image, that is the biometric data, from the image associated with said pre-image, that is from the encoded biometric data obtained by evaluating the one-way function.

The constructing of the one-way function comprises: receiving biometric training data; solving an optimization problem using the received biometric training data as input, resulting in supporting points as output; applying a data fitting method using the supporting points obtained as output of the optimization problem to construct the one-way function. A subsequent evaluation of said one-way function maps biometric data to encoded biometric data, wherein the encoded biometric data comprises encoded biometric features.

Constructing of one-way function is performed by a combination of a solving of optimization problem using the biometric data and a data fitting method used on the biometric metric at the supporting points provided by the optimization problem. The constructing of the one-way function by a combination of the solving of an optimization problem, followed by the application of a data fitting method may further increase the security of the resulting mapping of biometric data to irreversible output values of the constructed one-way function.

In a preferred embodiment, the one-way function is a continuous one-way function. The one-way function may advantageously enable a unique mapping of a specific piece of biometric data to specific encoded biometric data. As a further advantage, said mapping may enable a stable mapping of two different pieces of biometric data associated with the same individual differing only by slight variations to two points in a high dimensional feature space of the encoded biometric data which likewise differ only by a slight distance in said feature space. The dimension of said feature space is determined by an encoding length.

For example, the slight variations distinguishing two different pieces of biometric data associated with the same individual may comprise differences in angle between pictures of the face of the same individual, ageing effects between pictures of the face of the same individual, or noise present in two images of the face, the iris or a fingerprint of the same individual.

In a preferred embodiment, the optimization problem solved for constructing the one-way function is a bin packing optimization problem. Said bin packing optimization problem may take raw unencoded biometric data, in particular biometric training data, as input. The output obtained as the solution of the bin packing optimization problem comprises supporting points in the high dimensional feature space determined by the encoding length. The optimal solutions obtained as outputs of the bin packing optimization problem advantageously provide a way to define features of the biometric data in such a manner that said features of the biometric data homogeneously fill the high dimensional feature space, having approximate maximal distances to all other features in said high dimensional feature space.

Said homogeneous filling of the high dimensional feature space with approximately maximal distances increases the difficulty of adversarial attacks. Examples of adversarial attacks comprise image morphing, wherein e.g. the image of the face of an individual not authorized to access a secure location or computer system is altered to resemble the face of another individual possessing such an authorization. Another example of an adversarial attack is partial masking, wherein specific parts of an image, e.g. an image of the face, the iris or a fingerprint of an individual, are selectively hidden or altered, for example by alteration of colors, shapes or intensities.

The solution of the bin packing problem comprises providing supporting points $f_j(x)$ for input biometric data $x$, wherein the biometric data $x$ has a dimension $N$.

In a preferred embodiment, the bin packing optimization problem is solved on a quantum information processing system (QIPS) as a quantum bin packing optimization problem. Advantageously, the dimension of the high dimensional feature space accessible to a quantum information processing system, that is, the Hilbert space of said QIPS scales exponentially with the number of qubits comprised by said QIPS, enabling the bin packing optimization problem to be solved in a higher dimensional feature space than would be feasible using classical, i.e. non-quantum approaches. The increased dimension of the feature space in turn enables the encoding of a higher number of features of the biometric data.

In a preferred embodiment, the data fitting for constructing the one-way function comprises a quantum data fitting, wherein biometric data is used as an input and is evaluated at the supporting points. Said supporting points may be obtained as an output of the solving of the optimization problem, wherein biometric data, in particular biometric training data, was used as an input for the optimization problem.

For example, if the biometric data comprises images of fingerprints, features of said biometric data may relate to specific combinations or relative positions of whorls, ridges or arches in a fingerprint. Due to the continuity of the continuous one-way function two images of the same fingerprint taken at slightly different angles would then be mapped to two points in the feature space having a closer distance than for example two images of fingerprints of different fingers.

As another example, if the biometric data comprises images of the face of an individual, features of said biometric data may relate to relative positions of key areas of the human face, for example the position of the eyes, eyebrows, nose and/or mouth, or the color of the eyes. Due to the continuity of the continuous one-way function two images of the face of the same individual differing only by a small number of pixels relative to the resolution of the image would be mapped to closer points in feature space than for example, two faces of different individuals.

As a further example, if the biometric data comprises a recording of an individual's voice, features of said biometric data may relate to the presence and/or relative amplitude of specific frequencies in the recording. Due to the continuity of the continuous one-way function two recordings of the voice of the same individual would be mapped to closer points in feature space than for example, two recordings of the voices of different individuals.

The quantum data fitting may further comprise the learning of a set of learnable parameters of a vector $\lambda$, comprising of elements $\lambda_j$ with $j \in \{1, ..., M\}$ used as fit parameters. The fit parameters of the vector $\lambda$, in combination with the biometric data x, and having a dimension denoted as $N$, specify the one-way function

$$f(x, \lambda) := \sum_{j=1}^{M} f_j(x)\lambda_j$$ , wherein $f_j(x)$, for $j \in \{1, ..., M\}$ specifies the supporting points based on which the one-way function is constructed, using the biometric data as input.

Quantum data fitting advantageously leverages possible complexity speedups compared to classical algorithms for data fitting, said speedups including possible exponential advantages in algorithmic complexity and the higher dimension of the feature space enabled by quantum information processing systems.

In a preferred embodiment, the one-way function is a continuous one-way function. The continuity of the one-way function may advantageously enable a stable mapping of features of the biometric data.

The solving of the optimization problem corresponds to a categorizing and organizing of of biometric data based on its features, which may advantageously facilitate the finding of an optimal continuous one-way function using the quantum data fitting.

In general, the probabilistic nature of quantum computing as performed on a quantum information processing system enables the construction of solutions that do not satisfy a mathematical or mechanical and thereby retraceable principle of construction. Instead, the obtained solutions resemble maximally entropic states, e.g. such as states resulting from a Brownian motion.

In a preferred embodiment, the database may be filled with entries containing data, wherein said data may be used by the computer system to evaluate whether an individual requesting access should be granted or denied said access. Entries may be added to the database in a secure and anonymized manner, wherein said adding comprises: receiving biometric data and a PIN associated with an individual; encoding the received biometric data by evaluating the continuous one-way function, resulting in encoded biometric data; hashing the encoded biometric data, resulting in a hash; and storing the hash in the database, resulting in an added entry to the database.

In a preferred embodiment, the hashing of the biometric data comprises a classical hashing of a string, said string resulting from a combination or concatenation of the encoded biometric data and the PIN.

In a preferred embodiment, individuals may send access requests to the computer system, for example by interacting with the access-control device and/or the I/O interface of the computer system. Said access requests are processed by the computer system, wherein said processing comprises: receiving the access request from the individual; requesting biometric data and a PIN of the individual to identify the individual; receiving the biometric data and the PIN from the individual; encoding the received biometric data by evaluating the continuous one-way function, resulting in encoded biometric data; hashing the encoded biometric data and the PIN, resulting in a hash; comparing the hash to entries in the database; and based on the result of the comparing, sending a response to the individual, the response indicating a granting or denying of secure anonymized access to the restricted location, database and/or computer system to the individual based on the result of the comparing.

The hashing advantageously improves data security, as the hashes result at least from an irreversible output of the one-way function. Therefore, the storing of hashes may be more secure than a storing of the biometric data or a storing of identifying information such as names of individuals.

In a preferred embodiment, the database is a two-level database comprising a first level and a second level, wherein the first level stores encoded biometric data, and the second level stores hashes of the encoded biometric data and a PIN. In one embodiment, the second level of the database further comprises entries specifying access rights of individuals.

The method steps comprised by the constructing of the one-way function, the solving of the optimization problem and/or the data fitting may be performed in a purely classical manner on a classical computer system, in a purely quantum manner on a quantum information processing system (QIPS) or in a hybrid quantum-classical manner on a combination of the classical computer system and the quantum information processing system. The quantum information processing system may be communicatively coupled with the classical computer system.

The quantum information processing system comprises a quantum processing unit. In a preferred embodiment, the quantum processing unit comprises a gate-based quantum computer capable of executing quantum circuits comprising a set of quantum gates or quantum operations, said quantum gates or quantum operations acting on at least one qubit. In an alternative embodiment, the quantum processing unit comprises a quantum annealer capable of executing a quantum annealing procedure comprising a set of quantum operations, said quantum operations acting on at least one qubit.

In one embodiment, the quantum information processing system further comprises the use of a quantum cloud service provider, said quantum cloud service provider being communicatively couple with both the quantum processing unit and the classical computer system.

In another aspect of the invention, a computer system is disclosed, wherein the computer system is configured to execute the method for granting or denying secure anonymized access to a restricted location, database and/or computer system to an individual disclosed herein. The computer may in particular be the classical computer system.

In yet another aspect of the invention, a computer program product is disclosed, in particular a computer readable storage medium, wherein the computer program product comprises computer executable code, wherein the code is executable by at least one processor of a computer system, the execution of the code causing the computer system to perform the method for granting or denying secure anonymized access to a restricted location, database and/or computer system to an individual disclosed herein.

In a preferred embodiment, the computer program product comprises instructions to be executed by the quantum information processing system (600), said instructions comprising instructions for one or more quantum gates and/or quantum operations to be applied to one or more qubits on the quantum processing unit (602), instructions for a transpilation and/or optimization of a quantum circuit to be executed on the quantum processing unit, and/or instructions for a number of measurements to perform on the quantum processing unit.

Said instructions may advantageously be used to optimize a quantum computation such as a quantum circuit or a quantum annealing procedure for its execution on the quantum processing unit. Said optimizing may exemplarily result in a reduction of quantum gates or quantum operations, an optimized assignment of logical qubits to physical qubits on the quantum processing unit, and/or a mitigation and/or correction of errors.

It is understood that one or more of the aforementioned examples may be combined as long as the combined examples are not mutually exclusive.

## BRIEF DESCRIPTION OF THE DRAWINGS

In the following, examples are described in greater detail making reference to the drawings in which:

**Fig. 1** is a block diagram of the components and entities involved in the execution of the inventive method.

**Fig. 2** is a flow chart of an exemplary embodiment of the inventive method for the construction of a one-way function using bin packing optimization and quantum data fitting.

**Fig. 3** is a flow chart of the inventive method for the addition of entries of encoded biometric features into the database.

**Fig. 4** is a flow chart of the inventive method for the processing of an access request from an individual, given the one-way function and database containing encoded biometric data.

**Fig. 5** is a is a block diagram of an exemplary (classical) computer system for implementing at least part of the inventive method in accordance with an example of the present subject matter.

**Fig. 6** is a block diagram of an exemplary quantum processing unit and interactions with the classical computer system as shown in Fig. 5, using a direct communication or a communication via a quantum cloud service provider (QCSP).

## DETAILED DESCRIPTION

In the following, similar elements are denoted by the same reference numerals.

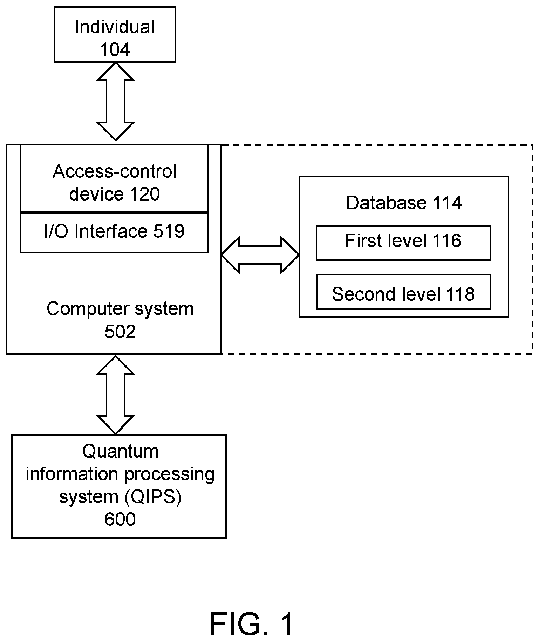

**Figure 1** shows a block diagram of the components and entities involved in the execution of the inventive method.

In a preferred embodiment, the computer system 502 is a classical computer system, comprising an I/O Interface 519 communicatively coupled with an access-control device 120. The access-control device 120 may comprise a camera, fingerprint scanner, iris scanner, audio recording device, and/or other device for the acquisition of the biometric data 100 provided by an individual 104 interacting with said access-control device 120.

In a preferred embodiment, the computer system 502 is communicatively coupled with a database 114. In an alternative embodiment, the computer system 502 comprises the database 114. In particular, the database 114 may be structured as a two level database, comprising a first level 116 and a second level 118.

The first level 116 exemplarily comprises entries containing encoded biometric data 108. The second level 118 exemplarily comprises entries containing hashes, said hashes resulting from a hashing of the encoded biometric data and a PIN. The hashing may be a hashing of a string of a combination or concatenation of the encoded biometric data and the PIN.

In a preferred embodiment, the computer system 502 is communicatively coupled with a quantum information processing system (QIPS) 600 comprising a quantum processing unit (QPU) 602. The computer system 502 is configured to send instructions for the execution of classical (i.e. non-quantum) and/or quantum algorithms. In particular, said algorithms comprise classical, hybrid or quantum algorithms for the solving 203 of the optimization problem, e.g. the solving of the bin packing problem 204 as a quantum algorithm, and/or classical, hybrid or quantum algorithms for the data fitting 208, e.g. the quantum data fitting. The computer system 502 is further configured to receive an output from the QIPS 600. Said output may take the form of one or more observations of basis states of a quantum system resulting from a specific number of measurements to be performed on the QPU 602 of the QIPS.

In one embodiment, the computer system 502 is configured to apply post-processing steps to any output received from the QIPS 600. Said post-processing steps may comprise arithmetic instructions, instructions for normalization or formatting of results or instructions for a conversion of data.

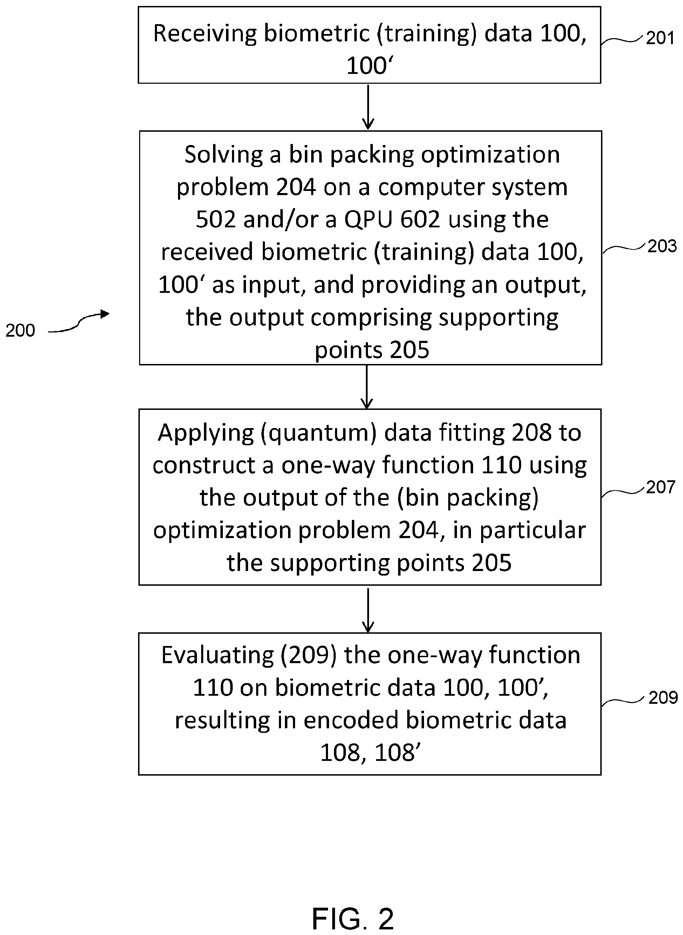

**Figure** 2 is a flow chart of an exemplary embodiment of the inventive method for the construction of a one-way function using bin packing optimization and quantum data fitting.

In step 201, biometric data 100 is received by the computer system 502. In particular, the biometric data 100 may comprise biometric training data 100'.

In step 203, an optimization problem 204 is solved on the computer system 502 and/or on the QIPS 600 comprising the QPU 602. The optimization problem is solved using the biometric (training) data 100, 100' received in step 201 as input, and provides an output, said output comprising support points 205. In a preferred embodiment, the optimization problem 204 is a bin packing optimization problem. In particular, the bin packing optimization problem 204 may be solved using the QIPS 600 as a quantum bin packing optimization problem.

The bin packing problem 204 may be used to minimize a number of bins required in which to pack a set of items, wherein the bins have a fixed capacity and the items correspond to the biometric (training) data 100, 100' provided as an input. The optimization problem 204 may be formulated as a combinatorial optimization problem suitable for quantum computing. In one embodiment, the bin packing problem 204 is a one-dimensional problem. In a preferred embodiment, the bin packing problem 204 is a multi-dimensional problem. In particular, the dimension of the bin packing problem 204 may be determined by, be dependent on or correspond to the dimension of the Hilbert space of the quantum system of the QPU 602.

In one embodiment, the quantum bin packing optimization problem 204 is formualted as a quadratic unconstrained binary optimization (QUBO) problem, allowing for an implementation as a quantum annealing method on a QPU 602 comprising a quantum annealer. In one embodiment, the features of the biometric (training data) 100, 100' are binarized, for example by the computer system 502 using a binarization algorithm. The binary variables of the QUBO problem then correspond to the presence or absence of said features of the biometric (training) data 100, 100'.

In an alternative embodiment, the combinatorial optimization problem of the quantum bin packing optimization problem 204 may be implemented on a QPU 602 comprising a gate-based quantum computer by implementing a quantum circuit for performing a quantum approximate optimization algorithm (QAOA). In one embodiment, the features of the biometric (training) data 100, 100' are encoded into basis states of a high-dimensional Hilbert space of the QPU 602. Amplitudes of said basis states exemplarily denote the presence or absence of particular features, for example the presence of an arch at a particular position in the image of a fingerprint.

In one embodiment, the quantum bin packing optimization problem is executed as a hybrid algorithm, using both the classical computer system 502 and the QIPS 600. For example, the classical computer system 502 may be used to execute pre-processing and/or post-processing steps on the input or output of the QIPS 600 respectively. The classical computer system 502 may further provide additional instructions and/or parameters, such as a number of measurements to perform or an annealing time for which the quantum annealing method is to be performed. As a further example, a classical optimization problem 204 may be solved first, using the output of said classical optimization problem as the input of the quantum bin packing optimization problem.

After performing the quantum annealing method or executing the quantum circuit implementing the quantum bin packing optimization problem 204, one or more measurements of the QPU 602 be performed. In one embodiment, said measurements are repeated to construct a statistical distribution of frequencies of the basis states of the quantum system of the QPU 602. Said statistical distribution may then correspond to a distribution of maximally entropic states, indicating encodings of the input biometric (training) data 100,100' which are approximately uniform and distributed with approximately maximal distances in the feature space provided by the Hilbert space of the quantum system of the QPU 602. Said maximally entropic states may be used for the definition of a set of one or more supporting points 205. Said encoding with approximate uniformity and maximal distances enables a stable mapping of the biometric features.

In step 207, a data fitting method 208 is applied to construct a one-way function 110 using the output of step 203, in particular using the supporting points 205.

In a preferred embodiment, the one-way function 110 is constructed as $f(x, \lambda) := \sum_{j=1}^{M} f_j(x) \lambda_j$, wherein $f_j(x)$, for $j \in \{1, \dots, M\}$ specifies the supporting points 205, using the biometric (training) data 100, 100' as input. The vector $\lambda$ comprises M learnable fitting parameters $\lambda_j$.

The basis functions $f_j(x)$ are defined by the supporting points 205 from step 203, for example, if a solution of the bin packing problem 204 places a set of features $x_1, \dots, x_k$ of the biometric data $x$ 100,100' into a first bin $b_1$ and a set of features $x_{k+1}, \dots, x_l$ into a second bin $b_2$, this set of features can define functions $f_j(x)$ with $j = \{1,2\}$, wherein $f_1(x)$ maps all features of $x$ depending on the set of features $x_1, \dots, x_k$ of the first bin $b_1$ whereas $f_2(x)$ maps all features of $x$ depending on the set of features $x_{k+1}, \dots, x_l$.

For example, $f_1(x)$ may be defined as $f_1(x) = 1$ if the sum of the features $x_1, \dots, x_k$ in the first bin $b_1$ exceeds the capacity of the first bin, and as $f_1(x) = 0$ otherwise. Said definitions may be inverted or adapted, for example by multiplication with a constant factor.

The data fitting method 208 may be a classical data fitting method. For example, a polynomial may be fitted to the input biometric (training) data 100, 100', wherein said polynomial has a number of fitting parameters. The degree of the polynomial, and thereby the number of fitting parameters may exemplarly be related to the number of features of the biometric (training) data, that is to the dimension of said biometric (training) data. The quality of the resulting fit may exemplarily be evaluated using standard statistical measures such as $R^2$ or "goodness of fit" values. The one-way function may be a linear or a non-linear function.

In a preferred embodiment, the data fitting method 208 is a quantum data fitting method. In said preferred embodiment, the one-way function may be defined using a set of qubits on a QPU 602 in a Hilbert space having a dimension of at least $N + M$, wherein $N$ is the dimension of the biometric (training) data 100,100' and M is the number of fit parameters.

In a preferred embodiment, the biometric (training) data 100, 100' is encoded into quantum states using amplitude encoding, allowing for $2^N$ features to be encoded in a set of $N$ qubits.

In a preferred embodiment, the quantum computation to be performed for the quantum data fitting comprises a use of an improved version of the Harrow-Hassidim-Lloyd (HHL) quantum algorithm as described in the publication "Quantum Data-Fitting" by Wiebe et al., wherein repeated measurements of the quantum system of the QPU 602 on which the quantum data fitting algorithm is executed result in the construction of a quantum state $|\lambda\rangle$, wherein said quantum state $|\lambda\rangle$ allows for the determination of the fit parameters $\lambda_1, \dots, \lambda_M$. embodiment, the determination of the fit parameters from the quantum state $|\lambda\rangle$ comprises a post-processing step on the classical computer system 502.

In a preferred embodiment, the one-way function 110 is a continuous one-way function. The continuity of the one-way function 110 further enables a stable mapping of similar biometric data to close points in feature space.

In step 209, the one-way function 110 constructed by the application of the data fitting method 208 in step 207 is evaluated on biometric data 100,100', resulting in encoded biometric data 108,108'.

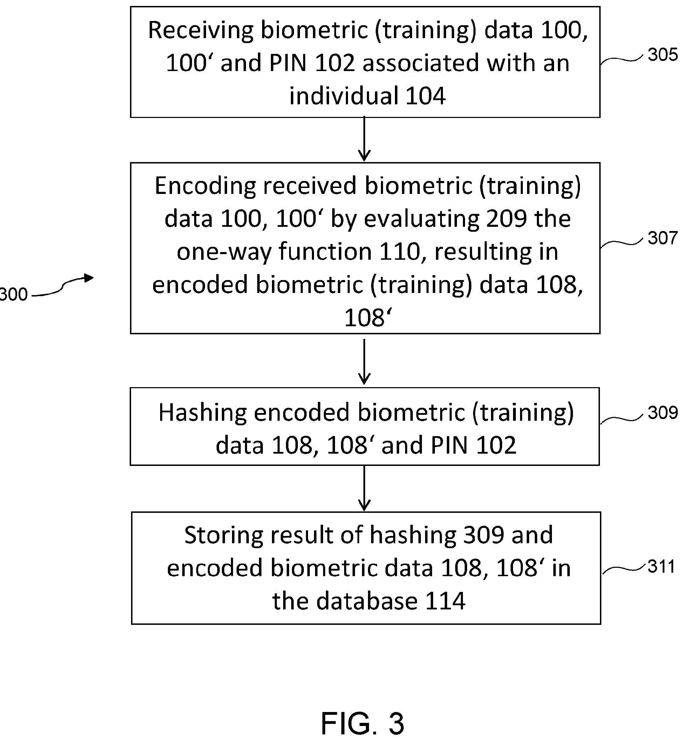

**Figure** 3 is a flow chart of the inventive method for the addition of entries of encoded biometric features into the database.

In a preferred embodiment, the database 114 contains entries from biometric data 100 used as biometric training data for constructing the one-way function 110, wherein the steps described in Figure 3 append further entries to the database 114. In an alternative embodiment, the database 114 comprises no entries, wherein the steps described in Figure 3 append entries to the empty database 114, for example entries corresponding to biometric training data 100 or entries copied from another pre-existing database.

In step 305, biometric data 100 is received by the computer system 502. In one embodiment, the biometric data is biometric training data 100', wherein said biometric training data was used for the construction of the one-way function 110. In an alternative embodiment, the biometric data 100 is received as a result of an access request from an individual 104.

In one embodiment, entries or features of biometric training data 100' may be comprised by biometric data 100. For example, the fingerprint of a specific individual 104 is used for the construction of the one-way function, while the same specific individual requests access using the same fingerprint at a later time point.

In step 307, the biometric (training) data 100, 100' received in step 305 is encoded by evaluating 209 the one-way function 110, resulting in encoded biometric (training) data 108, 108'. In a preferred embodiment, the encoded biometric (training) data 108, 108' is stored on the computer system during the execution of step 307.

In step 309, the encoded biometric (training) data 108, 108' obtained in step 307 is hashed. In a preferred embodiment, the hashing is performed on both the encoded biometric data 108, 108' and a PIN 102, resulting in a hash 112, wherein the PIN 102 and the encoded biometric (training) data 108, 108' are associated with the same individual 104. In an alternative embodiment, the encoded biometric (training) data 108, 108' can be hashed resulting in a first hash, and the PIN 102 can be hashed resulting in a second hash, wherein the first hash and the second hash may be combined, for example by concatenation, to obtain the hash 112.

In step 311, the hash 112 obtained as a result of the hashing in step 309 is stored in the database 114. In a preferred embodiment, the encoded biometric data 108, 108' is stored as an entry in the first level 116 of the two-level database 114. In said preferred embodiment, the hash 112 is stored in the second level 118 of the two-level database 114. In one embodiment, additional access rights for the individual 104 associated with the encoded biometric data 108,108' and the PIN 102 are stored in the second level 118 of the two-level database 114. Said access rights may exemplarily include an access level chosen from a set of one or multiple access levels, wherein each access level of said set grants the individual 104 access to increasingly strictly protected locations, computer systems and/or databases.

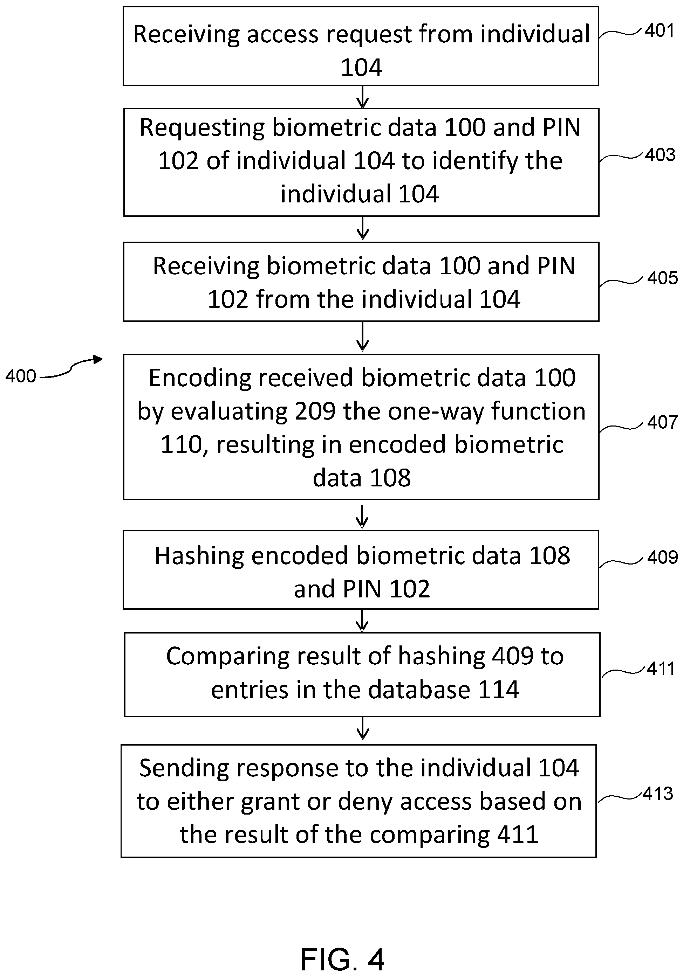

**Figure 4** is a flow chart of the inventive method for the processing of an access request from an individual, given the one-way function and database containing encoded biometric data.

In step 401, an access request is received by the computer system 502 by the individual 104. Said access request may exemplarily be initiated by the individual 104 by interacting with the access-control device 120 and/or the IO/interface 519 of the computer system 502, for example by pushing a button or scanning a security document, wherein the security document may comprise an image of the face of the individual to be used as the biometric data.

In step 403, the biometric data 100 and the PIN 102 of the individual 104 are requested by the computer system 502 to identify the individual 104.

In step 405, the biometric data 100 and the PIN 102 of the individual 104 are received by the computer system 502. In a preferred embodiment, the PIN 102 is received by entry in the I/O interface 519 of the computer system 502 by the individual 104, wherein the I/O interface comprises a number pad and/or keyboard.

The biometric data 100 required for the processing of the access request may exemplarily be received in the moment the access request is received. This step may be performed automatically, e.g. by an automated scanning of an individual's face, iris or fingerprint, or by a scanning of a security document provided as an identifying document by the individual. Exemplary security documents for identification of the individual 104 comprise ID cards, employee cards, passports, and/or driver's licenses. The identifying document may alternatively be presented using a mobile device, for example by presenting identifying information on a display of said mobile device.

In step 407, the biometric data 100 received in step 405 is encoded by evaluating 209 the one-way function 110, resulting in encoded biometric (training) data 108, 108'. In a preferred embodiment, the encoded biometric (training) data 108, 108' is stored on the computer system during the execution of step 407.

In step 409, the encoded biometric data 108 obtained in step 407 is hashed. In a preferred embodiment, the hashing is performed on both the encoded biometric data 108 and a PIN 102, resulting in a hash 112, wherein the PIN 102 and the encoded biometric data 108 are associated with the same individual 104. In an alternative embodiment, the encoded biometric data 108 can be hashed resulting in a first hash, and the PIN 102 can be hashed resulting in a second hash, wherein the first hash and the second hash may be combined, for example by concatenation, to obtain the hash 112.

In step 411, the hash 112 obtained as a result of the hashin in step 409 is compared to existing entries in the database 114. In a preferred embodiment, the hash 112 is compared with all hashes stored 311 as entries in the database 114, while a variable indicating the presence of a match in the database is set to a Boolean value of "false" by default. In a preferred embodiment, said variable is reset to its default value for every processing of an access request. If a hash is found in the database 114, wherein said hash matches the hash 112 obtained by the hashing 409 of the biometric data 100 and PIN 102 of the individual, the variable indicating the presence of a match in the database is set to a Boolean value of "true".

In a preferred embodiment, if a match is found in the database 114, and the variable indicating the presence of said match is set to a value of "true", access rights associated with the individul 104 associated with the matching hash 112 are retrieved from the second level 118 of the database 114.

Instead of a Boolean value, other indicators of a match in the database 114 may be used, for example "0" and "1" or "not found" and "found".

In step 413, a response to either grant or deny access is sent to the individual 104 based on the result of the comparing in step 411.

If a match has been found, the response indicates that the individual is granted access to the restricted location, computer system and/or database. If a match has not been found, the response indicates that the individual is denied access.

In a preferred embodiment, if a match has been found, the response may differ based on the access level retrieved from the access rights stored in the second level 118 of the database 114. For example, the individual may be granted full or partial access if the access level is found to be a high or low access level respectively.

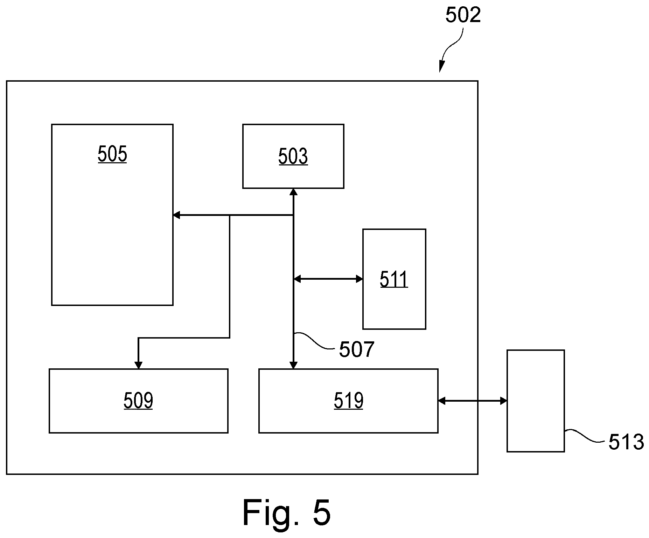

**Figure 5** is a block diagram of an exemplary computer system 502 for implementing the present method in accordance with an example of the present subject matter. The computer system may exemplarily comprise a server, desktop computer, laptop, tablet or mobile device.

In operation, the computer system 502 may be configured to execute the inventive method.

The components of the computer system 502 may include, but are not limited to, one or more processors or processing units 503, a storage system 511, a memory unit 505, and a bus 507 that couples various system components including memory unit 505 to processor 503. The storage system 511 may include for example a hard disk drive (HDD). The memory unit 505 may include computer system readable media in the form of volatile memory, such as random access memory (RAM) and/or cache memory.

The computer system 502 may also communicate with one or more external devices such as a keyboard, a pointing device, a display 513, etc.; one or more devices that enable an individual to interact with computer system 502; and/or any devices (e.g., network card, modem, etc.) that enable the computer system 502 to communicate with one or more other computing devices. Such communication can occur via I/O interface(s) 519. Still yet, the computer system 502 can communicate with one or more networks such as a local area network (LAN), a general wide area network (WAN), and/or a public network (e.g., the Internet) via a network adapter 509. As depicted, the network adapter 509 communicates with the other components of the client system 502 via bus 507.

The external devices 513 may further comprise an access-control device 120, wherein the access-control device 120 may exemplarily comprise a camera, fingerprint scanner, and/or audio recording device. In a preferred embodiment, the access-control device is used to obtain the biometric data 100, 100' from individuals 104.

The memory unit 505 is configured to store applications that are executable on the processor 503. For example, the memory unit 505 may comprise an operating system as well as one or more application programs.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

The term "computer system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

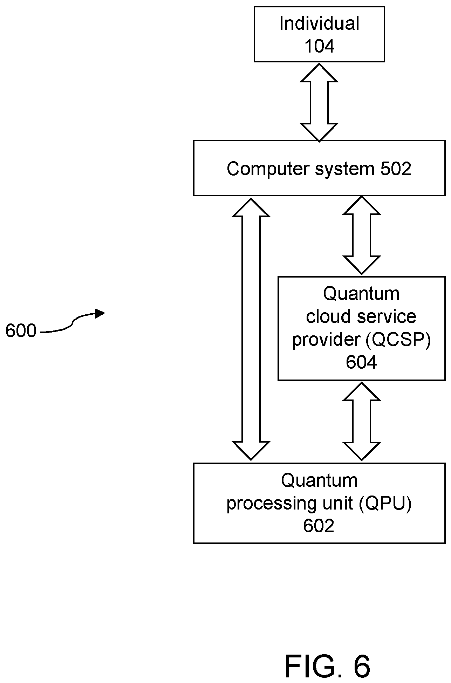

**Figure 6** is a block diagram of an exemplary quantum processing unit and interactions with the classical computer system as shown in Fig. 5, using a direct communication or a communication via a quantum cloud service provider (QCSP).

In one embodiment, the (classical) computer system 502 is communicatively coupled with the quantum processing unit (QPU) 602 of the quantum information processing system (QIPS) 600 directly, wherein the computer system 502 is configured to send instructions for the execution of quantum operations to the QPU 602.

The instructions sent by the computer system 502 may comprise instructions for one or more quantum gates and/or quantum operations to be applied to one or more qubits on the QPU 602, instructions for a transpilation and/or optimization of a quantum circuit or quantum computation to be executed on the QPU 602, for example instructions for error mitigation, error correction and/or an optimal assignment of logical qubits to physical qubits on the QPU 602, and/or instructions for a number of measurements to perform on the QPU 602.

The instructions received by the computer system 502 from the QPU 602 after the execution of a quantum circuit or quantum computation may comprise measurement results, information on the run time of the executed quantum circuit or quantum computation, the quantum gates or quantum operations executed and/or the order in which said quantum gates or quantum operations where executed. In a preferred embodiment, measurement results are provided to the classical computer 502 as a dictionary, wherein keys of the dictionary correspond to basis states of the quantum system of the QPU and values of the dictionary correspond to a number of measurements of the basis state of the corresponding key of the dictionary. The keys may exemplarily be provided as bitstrings wherein each bit corresponds to the state a particular qubit was measured in.

In an alternative embodiment, the (classical) computer system 502 is communicatively coupled with the quantum cloud service provider (QCSP) 604, wherein the QCSP 604 is in turn communicatively coupled with the QPU 602. In this alternative embodiment, the instructions sent by the computer system 502 to the QPU 602 and received by the computer system 502 from the QPU 602 are instead sent and received to and from the QCSP 604 respectively.

Qubits may be in states that are basis states of the quantum system, said basis states being denoted as $|0\rangle$ and $|1\rangle$ and being analogues to the 0 and 1 states of a classical bit. Qubits may further be in states that are superpositions of multiple basis states of the quantum system, wherein each basis state is associated with an amplitude, said amplitude being related to a probability for measuring the qubit to be in the basis state associated with said amplitude. For example, the superposition state $|\psi\rangle = \sqrt{1/4}\,|0\rangle + \sqrt{3/4}|1\rangle$ could be measured to be $|0\rangle$ in 25% of measurements and measured to be $|1\rangle$ in 75% of measurements for a sufficiently large number of measurements. Amplitudes of basis states may be updated or changed in a quantum computation consisting of a set of quantum gates in a quantum circuit or a set of quantum operations. The process comprising the initialization and execution of a quantum computation, followed by a measurement may be referred to as a "shot" or "run" of said quantum computation.

In one embodiment, the QPU 602 is a gate-based quantum computer configured to execute quantum operations including quantum gates on a set of one or more qubits. A configuration of quantum gates applied in a specific order to a specific set of qubits is referred to as a quantum circuit. The execution of a quantum circuit may further comprise an initialization and readout or measurement step. Quantum gates comprise single qubit and multi-qubit quantum gates.

Single qubit quantum gates exemplarily comprise the *X, Y* and Z Pauli gates, the $R_X(\theta)$, $R_Y(\theta)$ and $R_Z(\theta)$ rotation gates parametrized by an angle $\theta$, the *H* (also called Hadamard) gate, and the $P_\phi$ phase shift gate parametrized by an angle $\phi$.

Entanglement between qubits may be created by the execution of multi-qubit gates. Multi-qubit gates exemplarily comprise the *SWAP* gate, which swaps the states of two qubits and controlled gates, for example the *CX* (also called *CNOT*) gate. Controlled gates may comprise an arbitrary number of control qubits and a target qubit. An quantum operation is executed on the target qubit if all control qubits are in the $|1\rangle$ state. For example, the *CCX* gate comprises two control qubits, acting as an X gate on the target qubit only if both control qubits are in the $|1\rangle$ state.

The QPU 602 may be restricted to the execution of a specific set of gates, here denoted as natively available gates. Arbitrary quantum circuits may then be decomposed into a series of said specific set of natively available gates.

In an alternative embodiment, the QPU 602 is a quantum annealer configured to execute a quantum annealing method. Quantum annealers may exemplarily be used to solve computational problems, in particular problems formulated as combinatorial optimization problems, and in particular quadratic unconstrained binary optimization (QUBO) problems. When solving a QUBO problem, binary variables or features are mapped to the states of qubits and interactions and/or constraints of said variables or features are mapped to interactions between the qubits. The measurement of the qubits used to solve the QUBO problem results in a solution in the form of a binary bitstring, wherein each bit corresponds to the state of a qubit, and thereby to the value of an associated binary variable. The solution ideally corresponds to the ground state of the quantum system comprised by the qubits of the quantum annealer.

In a further embodiment, optimization problems may be solved using a gate-based quantum computer as the QPU 602 using the quantum approximate optimization algorithm (QAOA).

The implementation of the $|0\rangle$ and $|1\rangle$ states of qubits, the structure of quantum operations to be applied to the qubits and the implementation of measurements of qubits may vary depending on the physical quantum system used in the QPU 602.

In one embodiment, for qubits comprising one or multiple superconducting Josephson junctions, wherein a nonlinear inductance enables the formation of discrete energy levels, said energy levels exemplarily being identified with the $|0\rangle$ and $|1\rangle$ states of a qubit. In particular, qubits may be implemented as transmon qubits, flux qubits, charge qubits and/or phase qubits. For example, in a flux qubit, the $|0\rangle$ and $|1\rangle$ states correspond to different persistent current states circulating through a superconducting loop. As a further example, in phase qubits, a phase difference across a Josephson junction is used to define the qubit states the $|0\rangle$ and $|1\rangle$. The states of the qubit may be manipulated using microwave pulses tuned to the qubit transition frequency. The phase, frequency and/or amplitude of said microwave pulses may be varied to implement various quantum operations. Measurements may be performed for example by coupling the superconducting qubit to a resonator, wherein the resonator frequency shifts depending on the qubit state. The qubit state may thus be detected via said frequency shift by probing the resonator with a microwave signal. Measurements may further be performed by measuring a transmitted or reflected microwave signal from the resonator.

Advantageously, the use of superconducting Josephson junctions for the implementation of qubits enables improved scalability, as standard microfabrication techniques may be employed, resulting in a larger number of qubits in a QPU 602. Said qubits further enable fast gate operations on the order of nanoseconds.

In a further embodiment, qubits comprise trapped ions, in particular trapped ions in an ultra-high vacuum, said ions being trapped in space via the application of oscillating electric fields, for example as in a quadrupole ion trap (also known as a Paul trap). In said embodiment, the $|0\rangle$ and $|1\rangle$ states of a qubit may be the ground state and an excited state, or two different excited states of an ion, for example an ytterbium ion or a calcium ion. The states of the qubit may be manipulated using laser light emitting a frequency tuned to the energy of the transition between the $|0\rangle$ and $|1\rangle$ state to implement quantum operations. For example, a laser emitting a frequency of light tuned to the energy difference between the $|0\rangle$ and $|1\rangle$ states may implement single qubit rotation gates, wherein the length of the laser pulse corresponds to the angle of rotation. Said laser light may be applied to one or multiple qubits simultaneously to implement single or multi-qubit quantum operations. Measurements may be performed as an optical readout using fluorescence detection. For example, a higher fluorescence signal may correspond to the $|0\rangle$ state and a lower fluorescence signal may correspond to the $|1\rangle$ state.

Advantageously, the use of trapped ions for the implementation of qubits enabled longer coherence times compared to other implementations. As a further advantage, trapped ions may enable an all-to-all coupling of qubits in a QPU 602, which could reduce the number of operations required to implement a quantum algorithm, resulting in an improved performance of said quantum algorithm.

In a further embodiment, qubits comprise neutral atoms, in particular neutral atoms trapped in optical lattices or optical tweezers. In said embodiment, the $|0\rangle$ and $|1\rangle$ states of a qubit may be the ground state and an excited state, or two different excited states of a neutral atom, for example two hyperfine states of a rubidium atom. Said atoms may further be excited to Rydberg states using laser pulses. The states of the qubit may be manipulated using laser light emitting a frequency tuned to the energy of the transition between the $|0\rangle$ and $|1\rangle$ state to implement quantum operations. Multi-qubit gates may further be implemented using Rydberg blockades, preventing other neutral atoms from being excited to the same Rydberg state. For example, a laser emitting a frequency of light tuned to the energy difference between the $|0\rangle$ and $|1\rangle$ states may implement single qubit rotation gates, wherein the length of the laser pulse corresponds to the angle of rotation. Said laser light may be applied to one or multiple qubits simultaneously to implement single or multi-qubit quantum operations. Measurements may be performed as an optical readout using fluorescence detection. For example, a higher fluorescence signal may correspond to the $|0\rangle$ state and a lower fluorescence signal may correspond to the $|1\rangle$ state.

Advantageously, the use of neutral atoms for the implementation of qubits enables long coherence times, all-to-all connectivity, manipulation of qubits via standard techniques such as optical tweezers, and an operation at or near room temperature.

In a further embodiment, qubits comprise nitrogen-vacancy (NV) centers in a solid state system, in particular in diamond, comprising a nitrogen atom replacing a carbon atom in a diamond lattice and a vacancy adjacent to the nitrogen atom in the diamond lattice. In said embodiment, the $|0\rangle$ and $|1\rangle$ states are states of the spin of a free electron located at the vacancy of the NV center. The states of the qubit may be manipulated using microwave and optical techniques to implement quantum operations. Measurements may be performed as an optical readout using fluorescence detection. For example, a higher fluorescence signal may correspond to the $|0\rangle$ state and a lower fluorescence signal may correspond to the $|1\rangle$ state.

Advantageously, the use of NV centers in diamond for the implementation of qubits enables optical addressability, comprising optical initialization, manipulation and readout of qubits, operation at room temperature and improved shielding of the qubit from environmental noise by the embedding of the qubit in the solid state lattice of diamond.

In a further embodiment, qubits comprise electronic states of semiconductor quantum dots, for example quantum dots in silicon. The quantum dots may confine electrons or electron holes, enabling charge or spin states of said electrons or electron holes to be used as qubits. For example using a spin state, the $|0\rangle$ and $|1\rangle$ states of a qubit may correspond to an electron spin being in an "up" or "down" state relative to a reference axis. For example using a charge state, the $|0\rangle$ and $|1\rangle$ states of a qubit may correspond to the presence or absence of an electron in a specific quantum dot or the electron being in one of two coupled quantum dots. The states of the qubit may be manipulated using for example oscillating magnetic and/or electric fields, using the coupling of spins in adjacent quantum dots and/or by using electrostatic interactions between charges in adjacent quantum dots. Measurements may be performed for example by techniques of spin-to-charge conversion and/or charge sensing.

Advantageously, the use of quantum dots for the implementation of qubits enables scalability through the use of standard fabrication techniques for semiconductors, in particular silicon, and facilitating compatibility with other silicon-based technology.

In a further embodiment, qubits comprise photons. For example, the $|0\rangle$ and $|1\rangle$ states of a qubit may be defined based as photons having a horizontally or vertically orientated polarization relative to a reference axis. Alternatively, the $|0\rangle$ and $|1\rangle$ states may be defined as photons following distinct paths in space. As a further alternative, the the $|0\rangle$ and $|1\rangle$ states may be defined as photons arriving at a destination, for example a sensor, at an early or late time bin. The states of the qubit may be manipulated using optical elements to implement quantum operations, said optical elements comprising waveplates, beam splitters and/or phase shifters. Linear or non-linear optical processes may be used in a quantum computation using photons as qubits. Measurements may be performed for example by detection of a photon's polarization using a polarizing beam splitter and/or waveplates. Alternatively, measurements may be performed using interferometry techniques to infer the path of qubits, for example using Mach-Zehnder interferometry. As a further alternative, measurements may be performed using time-resolved detection of photons arriving at an early or late time bin, for example using single-photon detectors having sufficiently high temporal resolution.

Advantageously, the use of photons for the implementation of qubits enables operation at room temperature, high speed of quantum computations, lower decoherence when carrying information across long distances and compatibility with standard optical technologies, in particular techniques for the creation of photonic circuits.

In a further embodiment, qubits comprise quasiparticles, in particular anyons, in two-dimensional materials. Said materials exemplarily comprise topological superconductors, semiconductor nanowires and/or strongly correlated materials. For example, the qubits may be implemented using a system of Majorana fermions, wherein pairs of Majorana fermions may fuse to form either a vacuum state representing $|0\rangle$ or a fermion state representing $|0\rangle$. The states of the qubit may be manipulated by exchanging and/or braiding of anyons to implement quantum operations. Measurements may be performed for example by fusion measurements, observing whether a pair of fermions fuses to the vacuum state or the fermion state. Fusion measurements may be performed using interferometry techniques or via the use of ancillary qubits.

Advantageously, the use of anyons for the implementation of qubits enables intrinsic fault tolerance and error resilience via topological protection of qubit states.

It is understood that the invention presented in the present subject matter may be implemented using a quantum processing unit (QPU) 602 using an alternative quantum system for the implementation of qubits that differs from the implementations listed here, for example if such an alternative quantum system provides advantages such as improved resistance to noise, longer coherence times, lower gate error rates, lower measurement error rates a larger number of qubits, and/or advantages in the setup of the hardware of the quantum processing unit 602, e.g. relating to required cooling of at least parts of the quantum system and its associated hardware, e.g. sensors, or the creation of a vacuum.

It is further understood that instead of or in addition to qubits, the quantum system used in the quantum processing unit 602 may comprise a use of additional basis states beyond $|0\rangle$ and $|1\rangle$, i.e. the quantum system may comprise "qudits" wherein each qudit comprises a number of d basis states, with $d \geq 2$. For example, a qudit with $d = 3$, also called a qutrit, may take on superpositions of three basis states, exemplarily denoted as $|0\rangle$, $|1\rangle$ and $|2\rangle$, thereby advantageously increasing the dimension of the Hilbert space of the quantum system.

While the invention has been illustrated and described in detail in the drawings and foregoing description, such illustration and description are to be considered illustrative or exemplary and not restrictive; the invention is not limited to the disclosed examples.

**Claims**

1. A method for granting or denying secure anonymized access to a restricted location, database and/or computer system to an individual (104), the method comprising:

    - Constructing (200) a one-way function (110), and evaluating (209) the one-way function (110) on biometric data (100, 100'), resulting in encoded biometric data (108, 108'),
    wherein the constructing (200) of the one-way function comprises:

        - Receiving (201) biometric training data (100');
        - Solving (203) an optimization problem (204) using the received biometric training data (100, 100') as input, resulting in supporting points (205) as output, wherein the solving (203) of the optimization problem (204) comprises a solving of a bin packing optimization problem;
        - Applying (207) a data fitting method (208) to construct the one-way function (110) using the supporting points (205),
        wherein the data fitting (207) comprises a quantum data fitting (207) using the biometric data x (100, 100'), the biometric data in particular comprising biometric training data (100'), and a set of learnable parameters $\lambda_j$ with $j \in \{1, ..., M\}$, wherein the one-way function (110) takes the form

        $$f(x, \lambda) := \sum_{j=1}^{M} f_j(x)\lambda_j$$ , and wherein

        $f_j(x)$ specifies the supporting points (205);

    - Adding (300) of entries to a database (114), the entries comprising hashes (112) of encoded biometric data (108, 108') and PINs (102);
    - Processing (400) an access request from the individual (104); and
    - Based on the result of the processing (400), granting or denying secure anonymized access to the restricted location, database and/or computer system to the individual (104).

2. The method according to claim 1, wherein the adding (300) of entries to the database comprises:

    - Receiving (305) biometric data (100, 100') and a PIN (102) associated with an individual (104);
    - Encoding (307) the received biometric data (100, 100') by evaluating (209) the one-way function (110), resulting in encoded biometric data (108, 108');
    - Hashing (309) the encoded biometric data (108, 108') and the PIN (102), resulting in a hash (112); and
    - Storing (311) the hash in the database (114), resulting in an added entry to the database.

3. The method according to claims 1 or 2, wherein the processing (400) of the access request comprises:

    - Receiving (401) the access request from the individual (104);
    - Requesting biometric data (100) and a PIN (104) of the individual (104) to identify the individual;
    - Receiving (405) the biometric data (100) and the PIN (102) from the individual (104);
    - Encoding (407) the received biometric data (100) by evaluating (209) the one-way function (110), resulting in encoded biometric data (108);
    - Hashing (409) the encoded biometric data (108) and the PIN (102), resulting in a hash (112);
    - Comparing (411) the hash (112) to entries in the database (114); and
    - Based on the result of the comparing (411), sending (413) a response to the individual (104), the response indicating a granting or denying of secure anonymized access to the restricted location, database and/or computer system to the individual based on the result of the comparing (411).

4. The method according to any of the preceding claims, wherein the biometric data (100, 100') of the individual (104) comprises at least one of an image of the face of the individual, an image of a fingerprint of the individual, an image of the iris of the individual, and/or an audio recording of the voice of the individual.

5. The method according to any of the preceding claims, wherein the database (114) is a two-level database comprising a first level and a second level, wherein the first level stores encoded biometric data (108), and the second level stores the hashes (112).

6. The method according to any of the preceding claims, wherein the second level of the database (114) further comprises entries specifying access rights of individuals (104).

**7.** The method according to any of the preceding claims, wherein any one of the steps of the constructing (200) of the one-way function (210), in particular the solving (203) of the optimization problem (204) and/or the data fitting (207) is performed on a computer system (502), in particular a classical computer system (502), a quantum information processing system (600) or a combination of a classical computer system and a quantum information processing system, wherein the quantum information processing system is communicatively coupled to the computer system.

**8.** The method according to any of the preceding claims, wherein the quantum information processing system (600) comprises a quantum processing unit (602), wherein the quantum processing unit is a gate-based quantum computer or a quantum annealer, wherein preferably the quantum information processing system (600) further comprises the use of a quantum cloud service provider (604), the quantum cloud service provider being communicatively coupled with both the quantum processing unit (602) and the computer system (502).

**9.** A computer system (502) for granting or denying secure anonymized access to an individual (104), the computer system being communicatively coupled to an access-control device (120) and a database (114), wherein the computer system is configured to execute the method according to any of the preceding claims.

**10.** The computer system (502) according to claim 9, wherein the computer system is communicatively coupled to a quantum information processing system (600), wherein the quantum information processing system (600) comprises a quantum processing unit (602), wherein the quantum processing unit is a gate-based quantum computer or a quantum annealer.

**11.** A computer program product for granting or denying secure anonymized access to a restricted location, database and/or computer system (502) to an individual (104), wherein the computer program product comprises one or more computer readable storage media, on which program instructions are embodied, wherein the program instructions are executable by one or more processors (503) of the computer system (502), said program instructions causing the one or more processors to execute operations according to the method according to any of the preceding claims.

**12.** The computer program product according to claim 11, further comprising instructions to be executed by the quantum information processing system (600), said instructions comprising instructions for one or more quantum gates and/or quantum operations to be applied to one or more qubits on the quantum processing unit (602), instructions for a transpilation and/or optimization of a quantum circuit to be executed on the quantum processing unit, and/or instructions for a number of measurements to perform on the quantum processing unit.

**Patentansprüche**

**1.** Verfahren zum Gewähren oder Verweigern eines sicheren, anonymisierten Zugangs zu einem beschränkten Ort, einer Datenbank und/oder einem Computersystem für eine Person (104), wobei das Verfahren umfasst:

- Konstruieren (200) einer Einwegfunktion (110) und Auswerten (209) der Einwegfunktion (110) auf biometrischen Daten (100, 100'), was zu verschlüsselten biometrischen Daten (108, 108') führt,
wobei das Konstruieren (200) der Einwegfunktion umfasst:

- Empfangen (201) biometrischer Trainingsdaten (100');
- Lösen (203) eines Optimierungsproblems (204) unter Verwendung der empfangenen biometrischen Trainingsdaten (100, 100') als Eingabe, was in Stützpunkten (205) als Ausgabe resultiert, wobei das Lösen (203) des Optimierungsproblems (204) das Lösen eines Bin-Packing-Optimierungsproblems umfasst;
- Anwenden (207) eines Datenanpassungsverfahrens (208) zum Konstruieren der Einwegfunktion (110) unter Verwendung der Stützpunkte (205),
wobei die Datenanpassung (207) eine Quantendatenanpassung (207) unter Verwendung der biometrischen Daten x en (100, 100') umfasst, wobei die biometrischen Daten insbesondere biometrische Trainingsdaten (100') umfassen, sowie einen Satz lernbarer Parameter $\lambda_j$ mit $j \in \{1, ..., M\}$, wobei die Einwegfunktion (110) die

Form $f(x, \lambda) := \sum_{j=1}^{M} f_j(x)\lambda_j$ annimmt und wobei $f_j(x)$ die Stützpunkte (205) angibt;

- Hinzufügen (300) von Einträgen zu einer Datenbank (114), wobei die Einträge Hashes (112) von kodierten biometrischen Daten (108, 108') und PINs (102) umfassen;
- Verarbeiten (400) einer Zugriffsanfrage der Person (104); und

- basierend auf dem Ergebnis des Verarbeitens (400), Gewähren oder Verweigern des sicheren, anonymisierten Zugriffs auf den beschränkten Ort, die Datenbank und/oder das Computersystem für die Person (104).

2. Verfahren nach Anspruch 1, wobei das Hinzufügen (300) von Einträgen zur Datenbank umfasst:

   - Empfangen (305) von biometrischen Daten (100, 100') und einer PIN (102), die einer Person (104) zugeordnet sind;
   - Kodieren (307) der empfangenen biometrischen Daten (100, 100') durch Auswerten (209) der Einwegfunktion (110), was in kodierten biometrischen Daten (108, 108') resultiert;
   - Hashing (309) der kodierten biometrischen Daten (108, 108') und der PIN (102), was in einem Hash (112) resultiert; und
   - Speichern (311) des Hashes in der Datenbank (114), was zu einem hinzugefügten Eintrag in der Datenbank resultiert.

3. Verfahren nach Anspruch 1 oder 2, wobei das Verarbeiten (400) der Zugriffsanfrage umfasst:

   - Empfangen (401) der Zugriffsanfrage von der Person (104);
   - Abfragen biometrischer Daten (100) und einer PIN (104) der Person (104) zur Identifizierung der Person;
   - Empfangen (405) der biometrischen Daten (100) und der PIN (102) von der Person (104);
   - Kodieren (407) der empfangenen biometrischen Daten (100) durch Auswerten (209) der Einwegfunktion (110), was in kodierten biometrischen Daten (108) resultiert;
   - Hashing (409) der kodierten biometrischen Daten (108) und der PIN (102), was in einem Hash (112) resultiert;
   - Vergleichen (411) des Hashes (112) mit Einträgen in der Datenbank (114); und
   - basierend auf dem Ergebnis des Vergleichens (411), Senden (413) einer Antwort an die Person (104), wobei die Antwort ein Gewähren oder Verweigern des sicheren anonymisierten Zugangs zu dem eingeschränkten Ort, der Datenbank und/oder dem Computersystem an die Person basierend auf dem Ergebnis des Vergleichs (411) anzeigt.

4. Verfahren nach einem der vorhergehenden Ansprüche, wobei die biometrischen Daten (100, 100') der Person (104) mindestens eines der folgenden Elemente umfassen: ein Bild des Gesichts der Person, ein Bild eines Fingerabdrucks der Person, ein Bild der Iris der Person und/oder eine Tonaufnahme der Stimme der Person.

5. Das Verfahren nach einem der vorhergehenden Ansprüche, wobei die Datenbank (114) eine zweistufige Datenbank ist, die eine erste Ebene und eine zweite Ebene umfasst, wobei die erste Ebene kodierte biometrische Daten (108) speichert und die zweite Ebene Hashes (112) speichert.

6. Verfahren nach einem der vorhergehenden Ansprüche, wobei die zweite Ebene der Datenbank (114) ferner Einträge umfasst, die Zugriffsrechte von Personen (104) spezifizieren.

7. Verfahren nach einem der vorhergehenden Ansprüche, wobei ein jeglicher der Schritte des Konstruierens (200) der Einwegfunktion (210), insbesondere das Lösen (203) des Optimierungsproblems (204) und/oder die Datenanpassung (207) auf einem Computersystem (502), insbesondere einem klassischen Computersystem (502), einem Quanteninformationsverarbeitungssystem (600) oder einer Kombination aus einem klassischen Computersystem und einem Quanteninformationsverarbeitungssystem durchgeführt wird, wobei das Quanteninformationsverarbeitungssystem kommunikativ mit dem Computersystem gekoppelt ist.

8. Verfahren nach einem der vorhergehenden Ansprüche, wobei das Quanteninformationsverarbeitungssystem (600) eine Quantenverarbeitungseinheit (602) umfasst, wobei die Quantenverarbeitungseinheit ein gatterbasierter Quantencomputer oder ein Quantenannealer ist, wobei das Quanteninformationsverarbeitungssystem (600) vorzugsweise ferner die Nutzung eines Quanten-Cloud-Dienstanbieters (604) umfasst, wobei der Quanten-Cloud-Dienstanbieter sowohl mit der Quantenverarbeitungseinheit (602) als auch mit dem Computersystem (502) kommunikativ gekoppelt ist.

9. Computersystem (502) zum Gewähren oder Verweigern eines sicheren, anonymisierten Zugriffs für eine Person (104), wobei das Computersystem kommunikativ mit einer Zugriffskontrollvorrichtung (120) und einer Datenbank (114) gekoppelt ist, wobei das Computersystem konfiguriert ist, das Verfahren gemäß einem der vorhergehenden Ansprüche auszuführen.

10. Computersystem (502) nach Anspruch 9, wobei das Computersystem kommunikativ mit einem Quanteninformationsverarbeitungssystem (600) verbunden ist, wobei das Quanteninformationsverarbeitungssystem (600) eine Quantenverarbeitungseinheit (602) umfasst, wobei die Quantenverarbeitungseinheit ein gatterbasierter Quantencomputer oder ein Quantenannealer ist.

**11.** Ein Computerprogrammprodukt zum Gewähren oder Verweigern eines sicheren, anonymisierten Zugriffs auf einen beschränkten Ort, eine Datenbank und/oder ein Computersystem (502) für eine Person (104), wobei das Computerprogrammprodukt ein oder mehrere computerlesbare Speichermedien umfasst, auf denen Programmanweisungen verkörpert sind, wobei die Programmanweisungen von einem oder mehreren Prozessoren (503) des Computersystems (502) ausführbar sind, wobei die Programmanweisungen bewirken, dass der eine oder die mehreren Prozessoren Operationen gemäß dem Verfahren nach einem der vorhergehenden Ansprüche ausführen.

**12.** Das Computerprogrammprodukt gemäß Anspruch 11, das ferner Anweisungen umfasst, die von dem Quanteninformationsverarbeitungssystem (600) auszuführen sind, wobei die Anweisungen Anweisungen für ein oder mehrere Quantengatter und/oder Quantenoperationen umfassen, die auf ein oder mehrere Qubits auf der Quantenverarbeitungseinheit (602) anzuwenden sind, Anweisungen für eine Transpilation und/oder Optimierung eines Quantenschaltkreises, die auf der Quantenverarbeitungseinheit auszuführen ist, und/oder Anweisungen für eine Anzahl von Messungen, die auf der Quantenverarbeitungseinheit durchzuführen sind.

**Revendications**

**1.** Procédé permettant d'accorder ou de refuser à un individu (104) un accès sécurisé et anonymisé à un lieu, une base de données et/ou un système informatique soumis à des restrictions, le procédé comprenant :

- la construction (200) d'une fonction à sens unique (110), et l'évaluation (209) de la fonction à sens unique (110) sur des données biométriques (100, 100'), aboutissant à des données biométriques codées (108, 108'),
dans lequel la construction (200) de la fonction à sens unique comprend :

- la réception (201) de données d'apprentissage biométriques (100') ;
- la résolution (203) d'un problème d'optimisation (204) en utilisant les données d'apprentissage biométriques reçues (100, 100') comme entrée, ce qui donne des points d'appui (205) en sortie, dans lequel la résolution (203) du problème d'optimisation (204) comprend la résolution d'un problème d'optimisation de bin packing ;
- l'application (207) d'une méthode d'ajustement de données (208) pour construire la fonction à sens unique (110) à l'aide des points d'appui (205), dans lequel l'ajustement de données (207) comprend un ajustement de données quantiques (207) utilisant les données biométriques x (100, 100'), les données biométriques comprenant en particulier des données d'apprentissage biométriques (100'), et un ensemble de paramètres apprenables $\lambda_j$ avec $j \in \{1, \dots, M\}$, dans lequel la fonction à sens unique (110) prend la forme

$$f(x, \lambda) := \sum_{j=1}^{M} f_j(x)\lambda_j$$ , et dans lequel $f_j(x)$ spécifie les points d'appui (205) ;

- ajouter (300) des entrées à une base de données (114), les entrées comprenant des hachages (112) de données biométriques codées (108, 108') et des codes PIN (102) ;
- traitement (400) d'une demande d'accès émanant de l'individu (104) ; et
- sur la base du résultat du traitement (400), accorder ou refuser à l'individu (104) un accès sécurisé et anonymisé au lieu, à la base de données et/ou au système informatique soumis à restriction.

**2.** Procédé selon la revendication 1, dans lequel l'ajout (300) d'entrées à la base de données comprend :

- la réception (305) de données biométriques (100, 100') et d'un code PIN (102) associés à un individu (104) ;
- le codage (307) des données biométriques reçues (100, 100') en évaluant (209) la fonction à sens unique (110), ce qui donne des données biométriques codées (108, 108') ;
- le hachage (309) des données biométriques codées (108, 108') et du code PIN (102), ce qui donne un hachage (112) ; et
- stocker (311) le hachage dans la base de données (114), aboutissant à l'ajout d'une entrée dans la base de données.

**3.** Procédé selon les revendications 1 ou 2, dans lequel le traitement (400) de la demande d'accès comprend :

- la réception (401) de la demande d'accès provenant de l'individu (104) ;
- demander les données biométriques (100) et le code PIN (102) de l'individu (104) afin d'identifier l'individu ;
- recevoir (405) les données biométriques (100) et le code PIN (102) de la part de l'individu (104) ;
- le codage (407) des données biométriques reçues (100) par l'évaluation (209) de la fonction à sens unique (110), aboutissant à des données biométriques codées (108) ;
- hacher (409) les données biométriques codées (108) et le code PIN (102), ce qui donne un hachage (112) ;
- comparer (411) le hachage (112) aux entrées de la base de données (114) ; et
- sur la base du résultat de la comparaison (411), envoyer (413) une réponse à l'individu (104), la réponse indiquant l'octroi ou le refus d'un accès sécurisé et anonymisé au lieu, à la base de données et/ou au système informatique à accès restreint à l'individu sur la base du résultat de la comparaison (411).

4. Procédé selon l'une quelconque des revendications précédentes, dans lequel les données biométriques (100, 100') de l'individu (104) comprennent au moins l'une des éléments suivants : une image du visage de l'individu, une image d'une empreinte digitale de l'individu, une image de l'iris de l'individu et/ou un enregistrement audio de la voix de l'individu.

5. Procédé selon l'une quelconque des revendications précédentes, dans lequel la base de données (114) est une base de données à deux niveaux comprenant un premier niveau et un deuxième niveau, le premier niveau stockant des données biométriques codées (108) et le deuxième niveau stockant les hachages (112).

6. Procédé selon l'une quelconque des revendications précédentes, dans lequel le deuxième niveau de la base de données (114) comprend en outre des entrées spécifiant les droits d'accès des individus (104).

7. Procédé selon l'une quelconque des revendications précédentes, dans lequel l'une quelconque des étapes de la construction (200) de la fonction à sens unique (210), en particulier la résolution (203) du problème d'optimisation (204) et/ou de l'ajustement des données (207) est effectuée sur un système informatique (502), en particulier un système informatique classique (502), un système de traitement de l'information quantique (600) ou une combinaison d'un système informatique classique et d'un système de traitement de l'information quantique, dans lequel le système de traitement de l'information quantique est couplé de manière communicative au système informatique.

8. Procédé selon l'une quelconque des revendications précédentes, dans lequel le système de traitement de l'information quantique (600) comprend une unité de traitement quantique (602), dans lequel l'unité de traitement quantique est un ordinateur quantique à base de portes ou un annealer quantique, dans lequel, de préférence, le système de traitement de l'information quantique (600) comprend en outre l'utilisation d'un fournisseur de services cloud quantiques (604), le fournisseur de services cloud quantiques étant couplé de manière communicative à la fois à l'unité de traitement quantique (602) et au système informatique (502).

9. Système informatique (502) pour accorder ou refuser un accès sécurisé et anonymisé à un individu (104), le système informatique étant couplé de manière communicative à un dispositif de contrôle d'accès (120) et à une base de données (114), dans lequel le système informatique est configuré pour exécuter le procédé selon l'une quelconque des revendications précédentes.

10. Système informatique (502) selon la revendication 9, dans lequel le système informatique est couplé de manière communicative à un système de traitement de l'information quantique (600), dans lequel le système de traitement de l'information quantique (600) comprend une unité de traitement quantique (602), dans lequel l'unité de traitement quantique est un ordinateur quantique à base de portes ou un annealer quantique.

11. Produit logiciel pour accorder ou refuser un accès sécurisé et anonymisé à un lieu, une base de données et/ou un système informatique (502) à accès restreint à un individu (104), dans lequel le produit logiciel comprend un ou plusieurs supports de stockage lisibles par ordinateur, sur lesquels sont incorporées des instructions de programme, lesdites instructions de programme étant exécutables par un ou plusieurs processeurs (503) du système informatique (502), lesdites instructions de programme amenant le un ou les plusieurs processeurs à exécuter des opérations selon le procédé selon l'une quelconque des revendications précédentes.

12. Le produit logiciel selon la revendication 11, comprenant en outre des instructions destinées à être exécutées par le système de traitement de l'information quantique (600), lesdites instructions comprenant des instructions pour une ou plusieurs portes quantiques et/ou opérations quantiques à appliquer à un ou plusieurs qubits sur l'unité de traitement quantique (602), des instructions pour une transpilation et/ou une optimisation d'un circuit quantique à exécuter sur l'unité de traitement quantique, et/ou des instructions pour un certain nombre de mesures à effectuer sur l'unité de traitement quantique.

Individual
104

Access-control
device 120

I/O Interface 519

Computer system
502

Database 114

First level 116

Second level 118

Quantum
information processing
system (QIPS)
600

FIG. 1

Receiving biometric (training) data 100, 100' — 201

Solving a bin packing optimization problem 204 on a computer system 502 and/or a QPU 602 using the received biometric (training) data 100, 100' as input, and providing an output, the output comprising supporting points 205 — 203

200

Applying (quantum) data fitting 208 to construct a one-way function 110 using the output of the (bin packing) optimization problem 204, in particular the supporting points 205 — 207

Evaluating (209) the one-way function 110 on biometric data 100, 100', resulting in encoded biometric data 108, 108' — 209

FIG. 2

| Receiving biometric (training) data 100, 100' and PIN 102 associated with an individual 104 | ⟋ 305 |

↓

| Encoding received biometric (training) data 100, 100' by evaluating 209 the one-way function 110, resulting in encoded biometric (training) data 108, 108' | ⟋ 307 |

↓

| Hashing encoded biometric (training) data 108, 108' and PIN 102 | ⟋ 309 |

↓

| Storing result of hashing 309 and encoded biometric data 108, 108' in the database 114 | ⟋ 311 |

300 ⟋

## FIG. 3

```
┌─────────────────────────────────────┐
│ Receiving access request from individual │──401
│                  104                  │
└─────────────────────────────────────┘
                    ↓
┌─────────────────────────────────────┐
│ Requesting biometric data 100 and PIN │
│  102 of individual 104 to identify the │──403
│             individual 104            │
└─────────────────────────────────────┘
                    ↓
┌─────────────────────────────────────┐
│   Receiving biometric data 100 and PIN │──405
│        102 from the individual 104     │
└─────────────────────────────────────┘
                    ↓
┌─────────────────────────────────────┐
│   Encoding received biometric data 100 │
│ by evaluating 209 the one-way function │──407
│   110, resulting in encoded biometric  │
│              data 108                 │
└─────────────────────────────────────┘
                    ↓
┌─────────────────────────────────────┐
│  Hashing encoded biometric data 108   │──409
│             and PIN 102               │
└─────────────────────────────────────┘
                    ↓
┌─────────────────────────────────────┐
│   Comparing result of hashing 409 to  │──411
│        entries in the database 114    │
└─────────────────────────────────────┘
                    ↓
┌─────────────────────────────────────┐
│ Sending response to the individual 104 │
│ to either grant or deny access based on │──413
│    the result of the comparing 411    │
└─────────────────────────────────────┘
```

400

FIG. 4

502

505

503

511

507

509

519

513

Fig. 5

Individual
104

Computer system 502

600 →

Quantum
cloud service
provider (QCSP)
604

Quantum
processing unit (QPU)
602

# FIG. 6

**EP 4 675 469 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230318838 A1
- US 20080209227 A1

**Non-patent literature cited in the description**

- **GARCIA DE ANDOIN et al.** *Comparative Benchmark of a Quantum Algorithm for the Bin Packing Problem*, 15 July 2022
- **CELLINI et al.** *QAL-BP: an augmented Lagrangian quantum approach for bin packing*, 01 March 2024
- **ROMERO et al.** *Hybrid Approach for Solving Real-World Bin Packing Problem Instances Using Quantum Annealers*, 25 May 2023
- **WIEBE et al.** *Quantum Data-Fitting*, 03 July 2012
- **WIEBE.** *Quantum Data-Fitting*